# EUROPÄISCHE PATENTSCHRIFT

(11) **EP 2 605 884 B1**
(45) Veröffentlichungstag und Bekanntmachung des Hinweises auf die Patenterteilung: **28.09.2016**
(21) Anmeldenummer: 11741211.4
(22) Anmeldetag: 05.08.2011
(51) Int. Cl.: B23P 11/02, F26B 21/00, F26B 25/06, F26B 9/06, F26B 21/04

(54) **TURBO-TROCKNUNG DURCH LUFTMESSER**
TURBO DRYING USING AN AIR KNIFE
TURBO-SÉCHAGE PAR LAME D'AIR

(30) Priorität: 19.08.2010 DE 102010034869
(43) Veröffentlichungstag der Anmeldung: 26.06.2013
(73) Patentinhaber: Haimer GmbH, 86568 Hollenbach-Igenhausen (DE)
(72) Erfinder: HAIMER, Franz, 86568 Hollenbach (DE); KÜGLE, Wolfgang, 86551 Aichach-Griesbeckerzell (DE)
(74) Vertreter: Misselhorn, Hein-Martin
(86) Internationale Anmeldenummer: PCT/EP2011/063509
(87) Internationale Veröffentlichungsnummer: WO 2012/022630

(56) Entgegenhaltungen:
- EP-A1- 2 456 593
- DE-A1-102005 024 766
- DE-A1-102008 051 282
- DE-U1-202006 002 270
- US-A- 1 605 839

## Beschreibung

Die Erfindung betrifft eine Technologie zum Trocknen eines zuvor einer Wärmeapplikation unterworfenen und im Anschluss daran unter Einsatz einer Flüssigkeit wieder abgekühlten Werkstücks, insbesondere eines mehrteiligen Schrumpfverbundes, vorzugsweise in Gestalt eines Werkzeughalters zum zentrischen Einschrumpfen des Schafts eines Rotationswerkzeugs (sog. Schrumpffutter), wie etwa eines Bohrers, Fräsers oder Reibwerkzeugs.

Es existiert zahlreicher Stand der Technik, der sich mit der Lösung des Problems, einen einer Wärmeapplikation unterworfenen Werkzeughalter mit Hilfe einer Flüssigkeit wieder abzukühlen und dann effektiv zu trocknen, befasst.

Grob zusammengefasst sind bislang drei unterschiedliche Kühlprinzipien vorgeschlagen worden. Nämlich die Luftkühlung, die Flüssigkeitskühlung und die Kühlung durch Festkörperkontakt, d. h. durch inniges In-Kontakt-Bringen der zu kühlenden Oberfläche des Werkzeughalters mit einem stark wärmeleitenden Kühlkörper, in dem die Wärme abfließt.

Die insoweit bekannten Technologien und ihre Nachteile sind im Einzelnen in der deutschen Patentanmeldung der Anmelderin beschrieben, die das Aktenzeichen DE 10 2009 034 730 trägt und der EP 2 456 593 A1 entspricht. Die EP 2 456 593 A1 bildet einen einschlägigen Stand der Technik nach Artikel 54(3)EPÜ. Darüber hinaus offenbart das Dokument US 1,605,839 eine Luftbrause für allgemeine Trocknungszwecke, die nach Art einer Trockenhaube teilweise über den zu trocknenden Gegenstand gestülpt wird und die Feuchtigkeit in die Umgebung abführt.
Um die Probleme des bekannten Standes der Technik zu lösen, schlägt die Anmelderin in der besagten Anmeldung eine Vorrichtung vor, die sich eines im Kreislauf geführten Trägergasstroms bedient, in den eine Kühlflüssigkeit in feinen Tröpfchen eingenebelt wird. Auf diese Art und Weise ist es möglich, das zu kühlende Werkstück effektiv und sehr gleichmäßig zu kühlen, ohne es übermäßig zu benetzen.

Allerdings haben hausinterne Versuche der Anmelderin gezeigt, dass auch diese, an sich schon sehr gut arbeitende Vorrichtung noch weiter verbessert werden kann. Denn diese Vorrichtung vermag zwar die ohnehin nur geringfügig benetzten Werkstücke recht effektiv zu trocknen, indem die Vernebelung der Kühlflüssigkeit gestoppt wird und der reine, nicht mehr mit Kühlflüssigkeitströpfchen beaufschlagte Trägergasstrom das Werkstück noch eine Zeit lang weiter turbulent umströmt und dabei trocknet.

Beim Trocknen mit Hilfe der aus diesen älteren Anmeldungen bekannten Vorrichtung ist die Haupt-Strömungsrichtung des schnellen, turbulenten Trägergasstroms im Wesentlichen in Richtung der Werkstücklängsachse orientiert. Dies führt naturgemäß dazu, dass sich auf der Höhe von Vertiefungen, wie umlaufenden Nuten oder Einsenkungen für Stellschrauben und dergleichen, bildlich gesprochen "Leebereiche" bilden (bei einem schnell fließenden Gewässer würde man "Totwasserbereiche" sagen), in denen sich über das Ende des Trocknungszyklus hinaus Kühlflüssigkeitsreste sammeln können, ohne von dem das Werkstück turbulent umfließenden Trägergasstrom mitgerissen und entfernt zu werden.

Diesem Problem vermochten, wie hausinterne Versuche zeigen, auch Verwirbelungseinrichtungen nicht vollständig abzuhelfen, die kurz vor dem Bereich des zu trocknenden Werkstücks in den Trägergasstrom eingebaut wurden und die die Aufgabe hatten, den insgesamt nach wie vor hauptsächlich in Richtung Werkstücklängsachse fließenden Trägergasstrom noch intensiver zu verwirbeln und/oder mit einem Drall auszustatten.

Angesichts dessen ist es die Aufgabe der Erfindung, eine Vorrichtung zum Lufttrocknen eines zuvor einer Flüssigkeitsapplikation (Waschen und/oder Kühlen) unterworfenen Werkstücks anzugeben, mit der das Werkstück noch schneller und zuverlässiger getrocknet werden kann. Diese Aufgabe soll primär, aber nicht ausschließlich, für Werkstücke gelöst werden, die im Wesentlichen eine Rotationssymmetrie um eine Werkstücklängsachse zeigen und einen schwierig zu trocknenden Bereich aufweisen, der sich zu einem Ende hin verjüngt. Bei einem Werkzeugspannfutter, für das diese Aufgabe bevorzugt gelöst werden soll, ist dies derjenige Bereich, der sich vom maximalen Durchmesser des Werkzeugspannfutters hin zu der den Werkzeugschaft haltenden Hülsenpartie erstreckt.

Zur Lösung dieser Aufgabe sieht die Erfindung eine Vorrichtung mit den Merkmalen des Hauptanspruchs vor. Vorteilhafte Ausgestaltungen der Vorrichtung sind in den Unteransprüchen angegeben. Der Begriff "Luft" wird dabei, wie später noch erläutert, vorzugsweise in einem weiten Sinne verstanden.

Die Luftleiteinrichtung ist vorzugsweise ein gegenüber der Rohrwand, die den Kanal bildet, innerhalb dessen der Luftstrom zirkuliert und der das zu trocknende Werkstück aufnimmt, separates Bauteil.

Die Luftleitvorrichtung ist so ausgebildet, dass sie eine (ausgeprägte) Luftströmung entstehen lässt bzw. aufrechterhält, die im Wesentlichen in Richtung entlang der Werkstücklängsachse strömt (Abweichungen von bis zu 25 Grad, besser nur bis zu 15 Grad zur Längsachse, z. B. bei in gewisser Weise kegeligen Werkstücken, sind ohne Weiteres unkritisch, größere Abweichungen nur dann, wenn die erfindungsgemäße Funktion erreicht wird, beispielsweise weil die Abweichung lokal begrenzt ist).

Der entscheidende Punkt ist, dass sich eine ausgeprägte, das Werkstück gleichsam umhüllende Strömung in Längsrichtung und zumindest eine Strömung, die diese Strömung in Längsrichtung durchschneidet und in im Wesentlichen radialer Richtung erstmals auf das Werkstück trifft, überlagern.

Die Vorrichtung weist daher zusätzlich mindestens eine Blaseinrichtung auf, die das Werkstück mit einem Radialluftstrom anbläst. Ein Radialluftstrom ist ein Luftstrom, der zumindest auch eine ausgeprägte Geschwindigkeits- bzw. Bewegungskomponente in radialer Richtung besitzt, d. h. in Richtung einer Normalen zur Werkstücklängsachse. Ein solcher Radialluftstrom trifft idealerweise in einer Richtung (im Wesentlichen, d. h. +/- 10 Grad) parallel zu dieser Normalen erstmals auf die Werkstückoberfläche auf. Sofern der Radialluftstrom im Rahmen der weniger optimalen Ausführungsformen der Erfindung schräg auftrifft, trifft er unter einem Winkel α von zumindest ≤ 60 Grad, vorzugsweise ≤ 45 Grad und idealerweise ≤ 30 Grad erstmals auf der Werkstückoberfläche auf.

Ein solcher Radialluftstrom vermag auch solche Flüssigkeitsreste in Bewegung zu setzen, die an "Leestellen" zurückgeblieben sind, welche von der sich in Richtung der Werkstücklängsachse einstellenden Strömung nicht intensiv genug bestrichen werden. Sobald der Radialluftstrom solche Flüssigkeitsreste erfasst und aus ihrer abgeschatteten Position ("Lee-Position" bzw. "Totwasserposition") heraus in Bewegung gesetzt hat, werden diese von der Luftströmung, die im Wesentlichen in Richtung entlang der Werkstücklängsachse strömt, mitgerissen und in Strömungsrichtung vorbei an der gesamten verbleibenden Werkstückoberfläche abgeführt - eine Luftströmung, die in Zusammenwirkung mit der mindestens einen Radialluftströmung eine solche Abtransportfunktion leistet, wird als ausgeprägte Luftströmung im Wesentlichen in Richtung entlang der Werkstücklängsachse verstanden.

Dies unterscheidet die erfindungsgemäße Vorrichtung von solchen Vorrichtungen, bei denen zwar ebenfalls mindestens ein Radialluftstrom auf das Werkstück gerichtet wird, der jedoch überwiegend nur zur Verdunstung der Flüssigkeitsreste dient und/oder dazu, diese aufzuwirbeln, damit sie überwiegend unter dem Einfluss der Schwerkraft absinken - wie es beispielsweise bei Vorrichtungen der Fall ist, bei denen das zu trocknende Werkstück in einer dreiseitig geschlossenen, nach unten offenen Glocke aufgenommen und dann mindestens mit einem radial gerichteten Pressluftstrahl beschossen wird, dessen Volumenstrom scharf gebündelt ist bzw. zunächst schnell fließt, aber dennoch so gering ist, dass er nach seinem ersten Auftreffen auf die Werkstückoberfläche nur einen vergleichsweise langsam im Längsrichtung abfließenden Luftstrom entstehen lässt, der nicht dazu in der Lage ist, größere Flüssigkeitstropfen (z. B. mit einem mittleren Durchmesser von mehr als 0,5 mm) aktiv mitzureißen.

Soweit hier über Bewegungsrichtungen bzw. -komponenten oder über Geschwindigkeitskomponenten gesprochen wird, muss klar sein, dass es sich nicht um eine Mikrobetrachtung einzelner Teilchen in der turbulenten Strömung handelt, sondern um die Betrachtung der insgesamt resultierenden Bewegung bzw. Geschwindigkeit - wie sie der Fachmann beispielsweise mit Hilfe von in die Strömung eingebrachten einendig freien Fäden oder Rauchpartikeln sichtbar macht.

Die besagte ausgeprägte Luftströmung in Richtung entlang der Werkstücklängsachse wird vorzugsweise dadurch erzeugt, dass in die Luftleiteinrichtung ein im Wesentlichen bereits in besagter Richtung fließender Luftstrom einströmt, der sich dann - vorzugsweise stromabwärts - mit dem mindestens einen RadialLuftstrom überlagert. Alternativ, wenn auch nicht bevorzugt, kann jedoch auch nur mindestens ein Radialluftstrom zum Einsatz kommen, der so stark ist, dass er nach dem ersten, radial gerichteten Auftreffen auf die Werkstückoberfläche eine ausgeprägte Luftströmung im Wesentlichen in Richtung entlang der Werkstücklängsachse entstehen lässt.

Im Rahmen einer bevorzugten Ausführungsform ist vorgesehen, dass die das Werkstück umgreifende Luftleitvorrichtung so gestaltet ist, dass sie die Luftströmung entlang eines oberflächennahen Bereichs des Werkstücks leitet.

Diese bevorzugte Luftleitvorrichtung ist so ausgebildet, dass sie - bei korrekter Positionierung des Werkstücks - den überwiegenden Teil der sich um das Werkstück herum ausbildenden Luftströmung an den in Bezug auf die Trocknung kritischen Stellen der Werkstückoberfläche entlangleitet bzw. entlangführt.

Vorzugsweise umgreift die Luftleitvorrichtung das Werkstück zumindest abschnittweise.

Die erfindungsgemäße Luftleitvorrichtung ist dabei nicht einfach nur ein Teil des glattzylindrischen Rohrs mit konstantem Durchmesser, das das zu trocknende Werkstück aufnimmt und die Trocknungsluft heran- und ggf. auch wieder abführt, sondern ein davon zu unterscheidendes Bauteil, das so ausgestaltet ist, dass es die Luft in bestimmter Weise ablenkt bzw. leitet.

Anders als bei bloßem Anblasen des in dem besagten kreiszylindrischen Rohr aufgenommenen Werkstücks wird durch die Luftleitvorrichtung sichergestellt, dass die turbulente Luftströmung zumindest die kritischen Stellen der zu trocknenden Umfangsoberfläche des Werkstücks sehr intensiv und mit durchgängig hoher Geschwindigkeit bestreichen kann - weil es dann eben nicht so ist, dass der überwiegende Teil des Luftstroms die kritischen Stellen des zu trocknenden Werkstücks in größerer Entfernung passiert und daher ein guter Teil des Luftstroms wirkungslos "verpufft", sondern weil stattdessen der gesamte Luftstrom im Nahbereich einer für die Trocknung kritischen Stelle des Werkstücks vorbeigeführt wird.

Vorteilhafterweise weist die Luftleitvorrichtung, in Hauptflussrichtung der sich insgesamt einstellenden Strömung gesehen, unterschiedliche Innendurchmesser auf. Vorzugsweise ist die Luftleitvorrichtung so gestaltet, dass sie zumindest an einer oder den kritischen Stellen des zu trocknenden Werkstücks rund um den Umfang des zu trocknenden Werkstücks einen von der Trocknungsluft durchströmten Spalt mit einer Spalthöhe von ≤ 5 cm, besser ≤ 3 cm und idealerweise ≤ 1 cm ausbildet. Dabei muss diese Spalthöhe vorzugsweise nur im Wesentlichen eingehalten werden, d. h. es ist unschädlich, wenn lokal begrenzt eine größere Spalthöhe besteht. Typischerweise ist die Strömung, die die Luftleitvorrichtung bestimmungsgemäß an der Oberfläche des zu trocknenden Werkstücks entlangzuführen hat, im Wesentlichen eine Strömung, die auf kürzestem Wege oder mit einem gewissen Drall im Wesentlichen in Richtung der Werkstücklängsachse abfließt.

Im Rahmen einer ersten bevorzugten Ausführungsform ist vorgesehen, dass die Luftleitvorrichtung als eine das zu trocknende Werkstück übergreifende (vorzugsweise durchgängig übergreifende, das zu trocknende Werkstück im Wesentlichen dreiseitig umschließende) Luftleitglocke ausgestaltet ist, d. h. als eine Luftleitglocke, die zumindest während des Trocknungszyklus das gesamte Werkstück in ihrem Innenraum aufnimmt, vorzugsweise auch schon während des optionalen Abkühlzyklus.

Dabei ist der Durchmesser des von einer bevorzugt zu verwendenden Luftleitglocke gebildeten Innenraums nicht konstant. Stattdessen variiert der Innendurchmesser der Luftleitglocke entlang ihrer Längsachse - vorzugsweise so, dass die Luftleitglocke die Möglichkeit bietet, unterschiedlich große der bestimmungsgemäß mit der Vorrichtung zu trocknenden Werkstücke so in ihren Innenraum einzubringen, dass die Luftleitglocke rund um den Umfang des zu trocknenden Werkstücks einen von der Trocknungsluft durchströmten, in Längsrichtung durchgehenden Spalt mit den o. g. Maximalhöhen ausbildet, wobei sämtliches oben Gesagte hier sinngemäß gilt. Speziell bei der Auslegung der Luftleitglocke zum Trocknen von Werkzeugspannfuttern wird vorzugsweise wie folgt vorgegangen, um der Luftleitglocke ihre Form zu geben: Man bildet eine Schar von Werkzeugspannfuttern mit unterschiedlichen Durchmessern und Längen, die bestimmungsgemäß mit der Vorrichtung zu trocknen sein sollen. Die Luftleitglocke wird nun so ausgeformt, dass alle der bestimmungsgemäß zu trocknenden Spannfutter so in die Luftleitglocke eingebracht werden können, dass die Luftleitglocke rund um den Umfang des zu trocknenden Werkzeugspannfutters einen von der Trocknungsluft durchströmten, in Längsrichtung durchgehenden Spalt mit den o. g. Maximalhöhen ausbildet.

Die Luftleitglocke kann so eingesetzt werden, dass kleinere Werkzeugspannfutter tiefer in die Luftleitglocke eingeschoben werden müssen, bis sie ihre Optimalposition gefunden haben, als Werkzeugspannfutter mit einem größeren Durchmesser.

Alternativ kann die Luftleitglocke so eingesetzt werden, dass sämtliche von ihr aufzunehmenden Werkzeugspannfutter auf ein und derselben Grundfläche abgestellt werden und die in Richtung der Werkstückachse bewegliche Luftleitglocke über das Werkzeugspannfutter geschoben wird, bis sie - vorzugsweise auf dem Niveau der besagten Grundfläche - zum Anschlag kommt.

Die Aufnahme des zu trocknenden Werkstücks und speziell eines Werkzeugspannfutters in der Vorrichtung erfolgt vorzugsweise in einer Orientierung dergestalt, dass die Werkstücklängsachse zumindest im Wesentlichen parallel oder gleich der Längsachse der Luftleitglocke ausgerichtet ist. Gewisse Winkelabweichungen (bis ca. 15 Grad) zwischen der Werkstücklängsachse und der Längsachse der Luftleitglocke sind einigermaßen unkritisch, aber ohnehin eher ein Theoretikum.

Der Durchmesser des vom Inneren der Luftleitglocke gebildeten Aufnahmeraums vergrößert sich stromabwärts, vorzugsweise stetig. Diese Vergrößerung erfolgt zumindest abschnittsweise, so dass der stromabwärts liegende Querschnitt der Luftleitglocke, der das Ende des bestimmungsgemäß von der Luftleitglocke zur Verfügung gestellten Aufnahmeraums zum Trocknen des Werkstücks markiert, größer ist als der stromaufwärts liegende Querschnitt, der den Anfang des Aufnahmeraums markiert. Nicht ausgeschlossen (wenn auch unzweckmäßig) ist dabei, dass sich an das Ende des Aufnahmeraums eine gewisse Verengung der Luftleitglocke anschließt.

Dabei ist die Luftleitglocke so ausgestattet, dass zumindest ein Teil der die Luftleitglocke durchströmenden Trocknungsluft durch mindestens eine erste Öffnung, die im Optimalfall direkt in den Werkstückaufnahmebereich innerhalb der Luftleitglocke ausmündet, in die Luftleitglocke einströmt. Diese mindestens eine erste Öffnung bildet die oben angesprochene Blaseinrichtung und ist daher so ausgerichtet, dass sie einen Radialluftstrom erzeugt. Die oben hierzu aufgestellten Definitionen gelten sinngemäß.

Im Rahmen einer bevorzugten Ausführungsform ist vorgesehen, dass die mindestens eine erste Öffnung so ausgebildet ist und so gespeist wird, dass sie den Radialluftstrom zu einem Luftmesser ausformt, d. h. zu einem langgestreckten Flachstrahl, der den in der Luftleitglocke tendenziell in Richtung ihrer Längsachse abfließenden Luftstrom durchschneidet und bis an die Oberfläche des zu trocknenden Werkstücks dringt.

Im Rahmen einer bevorzugten Ausführungsform ist vorgesehen, dass die mindestens eine erste Öffnung als Langschlitz ausgebildet ist, dessen Längsachse mit der Längsachse der Luftleitglocke eine Ebene bildet oder dessen Längsachse in einer Schraubenlinie um die Längsachse der Luftleitglocke herumläuft, vorzugsweise mit einem Steigungswinkel von größer 20°, idealerweise größer 40° gegenüber der jeweils örtlichen Umfangslinie der Luftleitglocke.

Vorzugsweise erstreckt sich jeder dieser Langschlitze über einen überwiegenden Teil der Länge des in der Luftleitglocke bestimmungsgemäß für das zu trocknende Werkstück zur Verfügung stehenden Aufnahmeraums. Generell kann man sagen, dass von einem Langschlitz gesprochen werden kann, wenn die Schlitzlänge um mindestens den Faktor 5 größer als die Schlitzbreite ist. Unbeschadet dessen ist jedenfalls dann von einem Langschlitz im Sinne der Erfindung zu sprechen, wenn der Schlitz eine Schlitzlänge von vorzugsweise > 2 cm, besser > 4 cm aufweist, bei einer Schlitzbreite von < 2 mm, besser < 1 mm. Es besteht die Möglichkeit, mehrere vergleichsweise kurze Langschlitze hintereinander entlang einer gemeinsamen Linie anzuordnen, ohne den Gedanken der Erfindung zu verlassen.

Der Vollständigkeit halber anzumerken ist, dass die Wirkung das entscheidende Kriterium ist - als Äquivalent zu einem Langschlitz sind daher auch solche Gruppierungen von Öffnungen zu bezeichnen, die nur soweit durch Stege voneinander entfernt sind, dass sie einen gemeinsamen messer- bzw. balkenartigen Luftstrahl erzeugen, anstatt lauter einzelne Luftstrahlen abzugeben.

Mit dem mindestens einen Langschlitz soll erreicht werden, dass der erfindungsgemäß zum Einsatz kommende Radialluftstrom aufgrund der Länge des Langschlitzes im Wesentlichen in dem gesamten bestimmungsgemäß für das zu trocknende Werkstück vorhandenen Aufnahmeraum zur Verfügung steht, gleichgültig, ob ein kürzeres Werkstück weniger tief in den Aufnahmeraum der Luftleitglocke hineinragt oder ob ein längeres Werkstück tiefer in den Aufnahmeraum der Luftleitglocke hineinragt. Es soll also sichergestellt werden, dass jedes der bestimmungsgemäß mit der Vorrichtung zu trocknenden Werkstücke im Werkstückaufnahmeraum der Luftleitglocke positioniert werden kann, ohne hierbei speziell darauf achten zu müssen, dass der erfindungsgemäße Radialluftstrom das Werkstück im erforderlichen Maß bestreicht.

Im Rahmen einer anderen bevorzugten Ausführungsform ist vorgesehen, dass die Luftleitglocke die Kühlluft so führt, dass sie nach ihrem erstmaligen Auftreffen auf die zu trocknende Werkstückoberfläche dort verwirbelt, um im Anschluss daran mit einer Bewegung, die zunehmend in Richtung entlang der Längsachse des zu kühlenden Werkstücks orientiert ist, an diesem vorbeiströmt.

Erfindungsgemäß wird der zum Trocknen eingesetzte Luftstrom in einem im Wesentlichen geschlossenen Kreislauf geführt, der aus mindestens einer Pumpe, vorzugsweise in Gestalt eines Gebläses bzw. Radialgebläses besteht, und einem Luftkanal, der die Druckseite und die Saugseite der Pumpe unter Zwischenschaltung einer Werkstückaufnahmekammer und ggf. der Luftleitglocke verbindet. Dabei ist die Luftleitglocke so im Inneren des Luftkanals angeordnet, dass zumindest ein Teil des zum Trocknen eingesetzten Luftstroms an die äußere Umfangsfläche der Luftleitglocke herangeführt wird, um dann über die mindestens eine Öffnung in die Luftleitglocke einzuströmen und über das Innere der Luftleitglocke abzuströmen. Dieser im Wesentlichen geschlossene Kreislauf zeichnet sich vorzugsweise dadurch aus, dass in ihm eine große Luftmenge mit hoher Geschwindigkeit und vergleichsweise geringem Überdruck zirkuliert.

Zur Verbesserung der Trocknungswirkung kann der Luftstrom angewärmt werden, vorzugsweise um 5 bis 25 °C, besser um 5 bis 10 °C. Dies kann durch eine zusätzliche Heizeinrichtung geschehen oder bevorzugt durch die Abwärme der Pumpe.

Im Rahmen eines anderen bevorzugten Ausführungsbeispiels ist vorgesehen, dass sich der Durchmesser der Luftleitglocke, gegebenenfalls im Anschluss an einen Abschnitt mit einem im Wesentlichen konstanten Durchmesser, zur Abströmseite im Wesentlichen stetig oder schrittweise vergrößert und dort vorzugsweise, aber nicht zwingend, in einen weiteren Abschnitt mit einem im Wesentlichen konstanten Durchmesser übergeht. Idealerweise weist die Luftleitglocke an ihrem stromabwärtigen Ende einen Innendurchmesser auf, der um mindestens den Faktor 1,5, besser sogar um mindestens den Faktor 1,8 größer ist als ihr Innendurchmesser am stromaufwärtigen Ende.

Eine weitere bevorzugte Ausführungsform sieht vor, dass die Luftleitglocke so gelagert und angetrieben ist, dass sie sich während der Applikation der zum Trocknen verwendeten Luft zumindest zeitweilig um ihre Längsachse dreht. Dabei ist es günstig, wenn die Luftleitglocke mit einer Drehzahl von > 50 U/min, besser sogar mit einer Drehzahl von > 200 U/min rotiert. Eine derart rotierende Luftleitglocke erzeugt einen balken- oder luftmesserartigen Luftstrom, der um das zu trocknende Werkstück herumläuft, wodurch die Werkstückoberfläche mit großer Gleichmäßigkeit bestrichen wird. Der Antrieb kann elektromotorisch erfolgen oder unter Ausnutzung eines Teils der Energie des Trocknungs- bzw. Kühlluftstroms. Die Luftleitglocke besitzt dann entsprechende Schaufelblätter, die unter dem Einfluss der vorbeiströmenden Luft ein entsprechendes Antriebsmoment erzeugen.

Im Rahmen einer anderen bevorzugten Ausführungsform ist vorgesehen, dass die Luftleitglocke in einem Bereich stromaufwärts des Werkstückaufnahmebereichs mindestens eine zweite Öffnung aufweist, durch die alternativ oder zusätzlich zu dem durch die mindestens eine erste Öffnung in die Luftleitglocke einströmenden Luftstrom ein weiterer Luftstrom einströmt, der im Wesentlichen in Längsrichtung an der Oberfläche des Werkstücks vorbeiströmt. Auf diese Art und Weise kann im Inneren der Luftleitglocke eine relativ intensive Strömung in Längsrichtung hergestellt werden, die von Haus aus eine relativ gute Trocknungswirkung hat und die dazu in der Lage ist, die von dem erfindungsgemäß zusätzlich vorgesehenen Radialluftstrom aus den Problembereichen des Werkstücks ausgetriebene Flüssigkeit effektiv abzuführen.

Dabei ist die mindestens eine zweite Öffnung vorzugsweise als Fenster im stromaufwärtigen Ende der Luftleitglocke ausgebildet und zwar am besten als Fenster in der dortigen Umfangsfläche der Luftleitglocke. Idealerweise lässt sich die mindestens eine zweite Öffnung öffnen oder schließen, um die durch sie eintretende Luftmenge zu beeinflussen bzw. "ein- und auszuschalten".

Vorzugsweise ist die Luftleitglocke so im Inneren des sie umgebenden Luftkanals angeordnet, dass zumindest ein Teil des zum Trocknen eingesetzten Luftstroms an die Außenseite der Luftleitglocke herangeführt wird - und in der überwiegenden Zahl der Fälle dort ein Stück entlangströmt - um dann über die mindestens eine Öffnung in die Luftleitglocke einzuströmen und über das Innere der Luftleitglocke abzuströmen.

Dabei ist die Luftleitglocke vorzugsweise so in den Luftkanal eingebaut, dass im Endeffekt der (im Wesentlichen) gesamte in der Vorrichtung zirkulierende Luftstrom an irgendeiner Stelle in das Innere der Luftleitglocke eintritt und zumindest durch einen Abschnitt des Inneren der Luftleitglocke hindurchströmt.

Im Rahmen einer anderen bevorzugten Ausführungsform ist vorgesehen, dass der Außenumfang der Luftleitglocke mit mindestens zwei unterschiedlichen Kammern kommuniziert, die nicht gleichzeitig oder zumindest nicht dauerhaft gleichzeitig mit dem die Luftleitglocke beaufschlagenden Luftstrom verbunden sind. Auf diese Art und Weise wird es möglich, in der Luftleitglocke (quasi) zumindest einen umlaufenden Luftstrahl bzw. zumindest ein umlaufendes Luftmesser zu erzeugen, obwohl die Luftleitglocke als solche unbeweglich ist. Zu diesem Zweck werden in der Wand der Luftleitglocke zumindest zwei, besser mindestens drei, erste Öffnungen vorgesehen, von denen jede mit einer anderen Kammer kommuniziert. Sobald die Kammern wechselweise mit dem die Luftleitglocke beaufschlagenden Luftstrom verbunden und wieder von ihm getrennt werden, entstehen in der Kammer umlaufende Luftstrahlen bzw. Luftmesser.

Um jede der Kammern wechselweise mit dem Luftstrom verbinden und wieder von ihm trennen zu können, ist vorzugsweise eine umlaufende Steuerscheibe vorgesehen, welche mindestens ein Fenster und mindestens einen geschlossenen Flächenabschnitt aufweist, die nacheinander mit der mindestens einen Öffnung der Kammern in

Überdeckung gebracht werden, über die ein Luftstrom in die Kammer eintritt.

Vorzugsweise ist an der Innenoberfläche der Luftleitglocke ein Abstandhalter angebracht, der gewährleistet, dass zwischen einem in die Luftleitglocke eingebrachten Werkstück und der Innenoberfläche der Luftleitglocke (überall oder bis auf lokal begrenzte Ausnahmen) ein bestimmter Mindestabstand frei bleibt. Auf diese Art und Weise wird verhindert, dass ein zu trocknendes Werkstück so ungünstig in die Luftleitglocke eingebracht wird, dass der Abstand zwischen dem Werkstück und der Innenoberfläche der Luftleitglocke stellenweise so gering ist, dass die Oberfläche des Werkstücks an dieser Stelle nicht mehr hinreichend stark angeströmt wird - was u. U. zu einer unzulänglichen Trocknung führt. Stattdessen vereinfacht ein solcher Abstandhalter das Einbringen des Werkstücks in die Luftleitglocke. Die Luftleitglocke wird stets soweit auf das Werkstück herabgesenkt, bis sie die Endposition erreicht hat oder sie am Abstandhalter zur Anlage kommt.

Da die Abstandhalter mit heißen Bereichen des Werkstückes in Kontakt kommen können, bestehen sie aus hitzebeständigem Material, z. B. besonderen Kunststoffsorten, Metall, Keramik oder Kohlefaserwerkstoff.

Der Abstandhalter besteht vorzugsweise aus mindestens einer, bevorzugt mehreren sich in Längsrichtung oder entlang einer Schraubenlinie die Oberfläche entlang erstreckender Leisten, die nicht oder nur lokal an ihren Verankerungsstellen mit der Oberfläche der Luftleitglocke in Kontakt stehen, so dass sich in den übrigen Bereichen eine im Wesentlichen ungehinderte Luftströmung zwischen den Leisten und der Innenoberfläche der Luftleitglocke einstellen kann.

Im Rahmen einer anderen bevorzugten Ausführungsform ist vorgesehen, dass die Luftleitglocke während einer dem Trocknungsprozess zeitlich vorgelagerten Kühlphase mit einer Kühlflüssigkeit zur Abkühlung des Werkstücks beaufschlagt werden kann.

Vorzugsweise kann die Luftleitglocke zum Zwecke des Kühlens mit einem Kühlnebel beaufschlagt werden, am besten dadurch, dass an oder im Bereich der stromaufwärtigen Stirnfläche der Luftleitglocke mindestens ein Zerstäuber oder Vernebler angebracht ist, der bei Bedarf einen in die Luftleitglocke eintretenden Luftstrom mit fein verteilter Kühlflüssigkeit befrachtet.

Dies vorweggeschickt, kann zur konkreten Beschreibung der durch die Figuren illustrierten Ausführungsbeispiele übergegangen werden.

Weitere Wirkungsweisen, Vorteile und Ausgestaltungsmöglichkeiten ergeben sich aus den nachfolgend anhand der Figuren beschriebenen Ausführungsbeispielen.
Die Fig. 1 zeigt eine Gesamtansicht einer erfindungsgemäßen Vorrichtung im Trocknungsbetrieb.
Die Fig. 2 zeigt eine Gesamtansicht der erfindungsgemäßen Vorrichtung im Kühlbetrieb.
Die Fig. 3 zeigt einen Ausschnitt einer gemäß Fig. 1 und 2 gestalteten Vorrichtung im Bereich des Aufnahmeraums zum Einbringen und Halten des zu trocknenden Werkstücks, im Längsschnitt.
Die Fig. 4 zeigt eine Teilansicht der Fig. 3, ungeschnitten, schräg von oben.
Die Fig. 5 zeigt einen ebenen Schnitt durch die von den Fig. 3 und 4 gezeigte Vorrichtung.
Die Fig. 6 zeigt einen Ausschnitt aus einer zweiten erfindungsgemäßen Anlage, die prinzipiell wie jene aufgebaut ist, die die Fig. 1 und 2 zeigen, die sich jedoch in den von Fig. 6 gezeigten Details vom ersten Ausführungsbeispiel unterscheidet.
Die Fig. 7 zeigt ein drittes Ausführungsbeispiel, welches dazu dient zu illustrieren, wie ein Abstandhalter aussehen kann, der bei sämtlichen erfindungsgemäßen Ausführungsbeispielen zum Einsatz kommen kann.

Die im Rahmen der Ausführungsbeispiele gezeigten Vorrichtungen sind durchweg als Kombinationsgeräte ausgeführt, die das Werkstück sowohl kühlen als auch trocknen können. Die nachfolgenden Ausführungen gelten jedoch, sofern sich aus ihnen nicht ausdrücklich etwas anderes ergibt, auch für Vorrichtungen, die ausschließlich als Vorrichtungen zum Trocknen ausgestaltet sind.

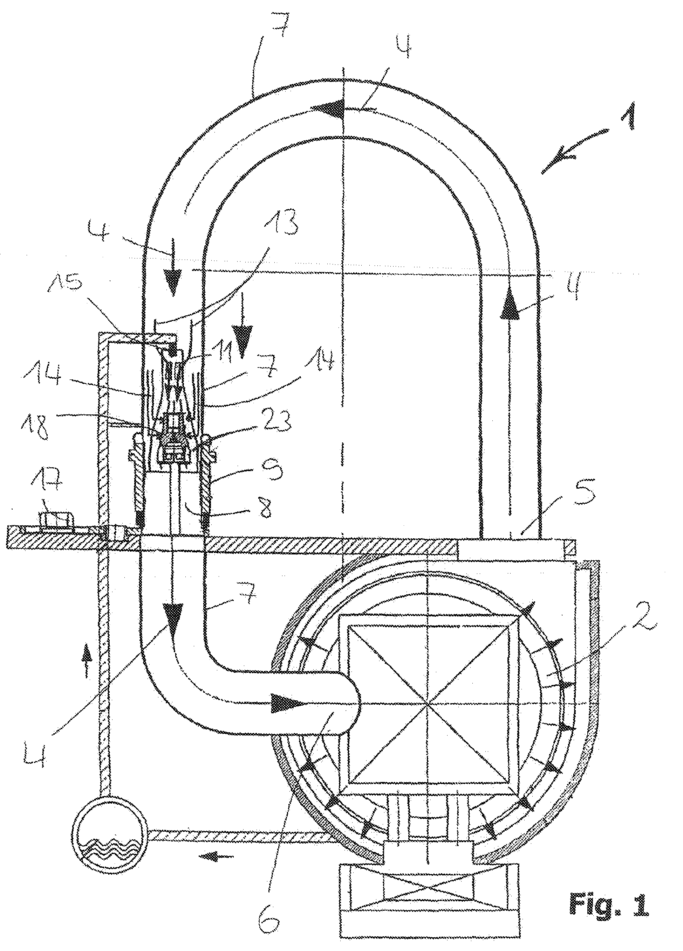

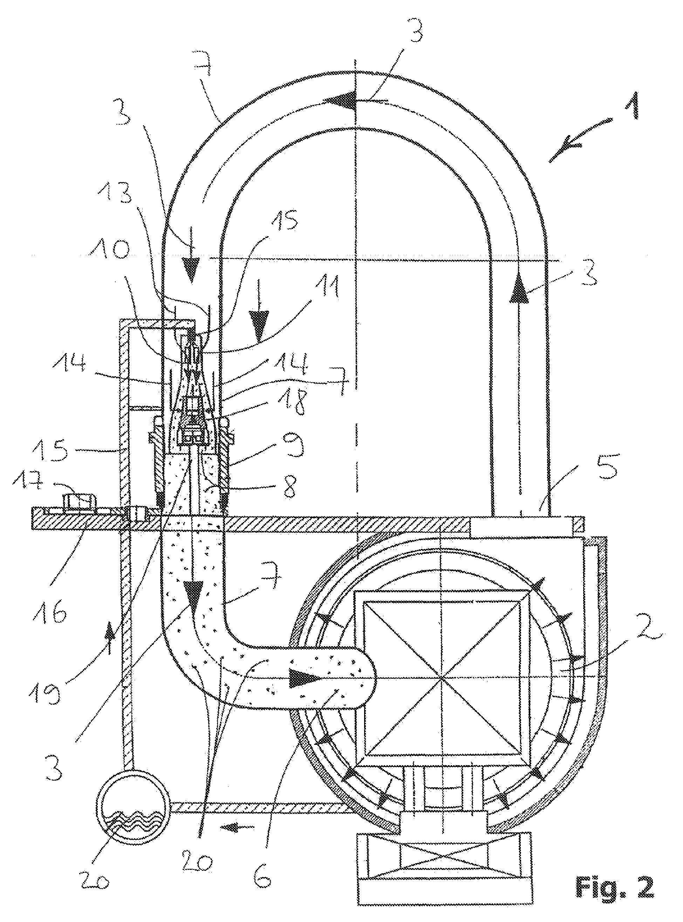

Die zum Zwecke der Erläuterung der Erfindung angegebenen Ausführungsbeispiele funktionieren alle nach dem gleichen Grundprinzip, das nachfolgend anhand der Fig. 1 und 2 näher erläutert wird.

Ein wesentlicher Teil der gesamten Vorrichtung 1 ist die Pumpe 2, die hier als Radialgebläse ausgeführt ist. Die Verwendung eines Radialgebläses ist besonders zweckmäßig, da aus einem Radialgebläse im Inneren des Gebläses abgeschiedenes bzw. kondensiertes Kühlmedium sehr einfach abgeführt werden kann. Dem Prinzip nach ist aber auch die Verwendung eines anderweitigen Gebläses oder einer auf einem ganz anderen Prinzip beruhenden Pumpe denkbar. Die Pumpe kann auch aus einer Kombination von mehreren Gebläsen bestehen, die parallel und/oder in Reihe geschaltet werden können.

Das Radialgebläse erzeugt einen kräftigen Luftstrom, der im Falle des geschilderten Ausführungsbeispiels in der Kühlphase als Trägerluftstrom 3 für die Kühlnebeltröpfchen dient und in der Trocknungsphase als Trocknungsluftstrom 4. Der Begriff "Luft" wird im Rahmen der Erfindung in einem weiten Sinne aufgefasst - er bezeichnet zwar primär, weil am leichtesten handhabbar und verfügbar, "normale" Umgebungsluft, ggf. aber auch jedes andere Gas, das sich dazu eignet, das Werkstück anzublasen, um es dadurch zumindest zu trocknen.

Die Pumpleistung des Gebläses ist relativ hoch, vorzugsweise regelbar oder steuerbar und liegt vorzugsweise oberhalb von 5 m³/min, besser noch sogar oberhalb von 10 m³/min. Die mittlere Strömungsgeschwindigkeit des zum Trocknen und oder als Träger eingesetzten Luftstroms am Werkstück liegt vorzugsweise oberhalb von 0,5 m/s, besser oberhalb von 1,5 m/s oder sogar 2,5 m/s. Der Überdruck innerhalb des geschlossenen Systems, in dem der Luftstrom zirkuliert, ist vorzugsweise < 0,4 bar, besser noch < 0,15 bar. Vorzugsweise wird zur Realisierung der Erfindung, anders als z. T. im Stand der Technik vorgeschlagen, kein Pressluftstrahl verwendet, der auf die Oberfläche des zu trocknenden Werkstücks abgeschossen wird, sondern eine mit hoher Geschwindigkeit, aber (verglichen mit dem Druck, unter dem Pressluft herangeführt wird, meist zwischen 3 und 10 bar) unter geringem Druck herangeführte Luftmenge.

Der Trocknungsluftstrom 4 und ggf. auch der Trägerluftstrom 3 werden in einem im Wesentlichen in sich geschlossenen Kreislauf geführt, wobei gerade bei der Verwendung von der Umgebungsluft entsprechender Luft im Einzelfall kleinere Leckageverluste unbedenklich sein können. Zu diesem Zweck ist die Druckseite 5 des Gebläses über einen Gaskanal 7 mit der Saugseite 6 des Gebläses verbunden, der Gaskanal 7 sorgt also dafür, dass der Luftstrom durchgängig mit im Wesentlichen derjenigen Geschwindigkeit zirkuliert, die im Nahbereich hinter der Pumpe zu messen ist.

Der Luftkanal 7 wird im vorliegenden Ausführungsbeispiel durch ein Rundrohr gebildet, das vorzugsweise einen Innendurchmesser von > 10 cm aufweist. Die Verwendung eines Rundrohrs ist jedoch nicht zwingend, es kann theoretisch auch ein flexibler Schlauch, ein Flachkanal oder ein Kanal mit einem polygonförmigen Querschnitt verwendet werden.

Der Luftkanal 7 ist im vorliegenden Ausführungsbeispiel so gestaltet, dass der in ihm zirkulierende Luftstrom auf der Druckseite der Pumpe zunächst in vertikal aufwärtiger Richtung geführt wird, dann über einen Rohrkrümmer um 180° umgelenkt wird, um nun als Fallstrom in vertikal abwärtiger Richtung geführt zu werden.

Wie anhand der Figur 1 gut zu erkennen, ist in dem Luftkanal an zumindest einer Stelle ein Aufnahmeraum 8 für das Werkstück vorgesehen. Dieser Aufnahmeraum kann nach Öffnen einer Schiebemuffe 9 mit dem Werkstück beschickt und danach wieder zumindest im Wesentlichen luftdicht verschlossen werden.

Optional ist eine Zuführeinrichtung vorgesehen, die im vorliegenden Fall als Drehteller 16 ausgebildet ist, der mit mehreren entsprechend gestalteten Werkstückaufnahmen 17 versehen ist, auf welchen die abzukühlenden Werkstücke 18 abgesetzt werden können. Der Drehteller schleust sie schrittweise nacheinander durch den Aufnahmeraum 8, in dem er bei jedem Wechsel um den entsprechenden Winkel weiterdreht.

Innerhalb des Luftkanals 7 ist die Luftleitvorrichtung 10 untergebracht, die hier in Gestalt einer Luftleitglocke ausgeführt ist, für die ebenfalls die Bezugsziffer 10 gewählt wurde.

Daher wird im Folgenden durchgängig nur noch von Luftleitglocke gesprochen, der Begriff kann aber - soweit sich aus dem Kontext nicht eindeutig etwas anderes ergibt - verallgemeinernd als Luftleitvorrichtung gelesen werden, obgleich der Begriff Luftleitvorrichtung generell eine weiter auszulegende Bedeutung hat als der Begriff Luftleitglocke.

Die Luftleitglocke ist vollständig innerhalb des Luftkanals 7 untergebracht, d. h. der Luftkanal 7 umgibt die Luftleitglocke vollständig. Dabei ist die Luftleitglocke 10 so in dem Luftkanal 7 untergebracht, dass sie von ihrer Außenseite her durch die im Luftkanal zirkulierende Luft angeströmt werden kann. Die Luftleitglocke begrenzt den Aufnahmeraum 8 gegenüber dem Luftkanal 7.

Unterhalb der Luftleitglocke ist eine Vorrichtung zum Anheben des Werkstücks vorgesehen, hier in Gestalt eines kleinen Hubtischs 19, der ggf. mit dem Drehteller 16 so zusammenarbeitet, dass er dessen jeweilige Werkstückaufnahme 17 zusammen mit dem darauf abgestellten Werkstück 18 anheben kann. Hiermit oder mit anderweitigen Positionierungsmitteln wird das Werkstück in den Werkstückaufnahmeraum 23 der Luftleitglocke hineingehoben, bis es seine korrekte Position erreicht hat.

Alternativ (deutlich bevorzugt) ist es auch möglich, die Luftleitglocke so zu gestalten, dass sie zum Neubeschicken des Aufnahmeraums angehoben und dann wieder über das zwischenzeitlich in den Aufnahmeraum 8 eingebrachte Werkstück abgesenkt werden kann.

Wie anhand der Figur 1 zumindest grob erkennbar ist, weist die Luftleitglocke Öffnungen 11, 12 auf, über die der im Luftkanal 7 zirkulierende Luftstrom in das Innere der Luftleitglocke eintritt.

Die Luftleitglocke weist an ihrem stromaufwärtigen Ende - im obersten Drittel, vorzugsweise noch oberhalb der Grenze des Bereichs der bestimmungsgemäß zur Aufnahme der zu trocknenden Werkstücke vorgesehenen Aufnahmebereichs - mindestens eine zweite Lufteintrittsöffnung 11 auf, über die ein nicht unerheblicher Teil des insgesamt zur Verfügung stehenden Luftstroms in die Luftleitglocke eintritt, als sog. zweiter Teilluftstrom 13. Dieser Teilluftstrom 13 erreicht das in der Luftleitglocke befindliche Werkstück als ein das Werkstück im Wesentlichen in Richtung entlang dessen Längsachse überstreichender Luftstrom. Vorzugsweise sind am Umfang der Luftleitglocke statt einer mehrere (meist gleichmäßig) verteilte zweite Lufteintrittsöffnungen vorgesehen, idealerweise drei oder sogar mindestens vier.

Ein anderer nicht unerheblicher Teil des insgesamt zur Verfügung stehenden Luftstroms passiert die Luftleitglocke an ihrer Außenseite so weit, bis dieser sog. erste Teilluftstrom 14 an oder stromabwärts der Grenze des Bereichs angelangt ist, der innerhalb der Luftleitglocke zur Aufnahme der bestimmungsgemäß hier zu trocknenden Werkstücke vorgesehen ist. Hier befindet sich mindestens eine Blaseinrichtung in Gestalt einer ersten Lufteintrittsöffnung 12, die diesen ersten Teilluftstrom 14 zu mindestens einem Radialluftstrom im o. g. Sinne formt und in das Innere der Luftleitglocke eintreten lässt. Der zeitweilig als Radialluftstrom ausgebildete Teilluftstrom 14 bestreicht beim erstmaligen Auftreffen auf die Werkstückoberfläche auch die Problemzonen des Werkstücks intensiv (Nuten, Rücksprünge, Einsenkungen, Stellen mit sprunghafter Durchmesseränderung) und reißt die dort noch anhaftenden Kühlflüssigkeitströpfchen mit sich. Im Zuge seines erstmaligen Auftreffens auf die Werkstückoberfläche ändert der Teilluftstrom 14 seine Richtung und vereint sich unter Mitnahme der von ihm erfassten Kühlflüssigkeitströpfchen mit dem bereits in Längsrichtung des Werkstücks fließenden Teilluftstrom 13, um dann gemeinsam mit diesem abzufließen .

Vorzugsweise wird die besagte Blaseinrichtung durch mindestens eine, vorzugsweise mindestens drei, besser sechs bis zehn erste Öffnungen 12 in der Wand der Luftleitglocke gebildet. Diese mindestens eine erste Öffnung ist so dimensioniert und ausgestaltet, dass sie einen Radialluftstrom gemäß o. g. Definition erzeugt.

Bei alledem ist zu beachten, dass es günstig, aber nicht zwangsweise erforderlich ist, dass der Teilluftstrom 13 und der Teilluftstrom 14 gleichzeitig fließen.

Vielmehr kann die Vorrichtung erfindungsgemäß auch so betrieben werden, dass (zumindest in der Trocknungsphase) der gesamte zur Verfügung stehende Luftstrom den Weg entlanggeleitet wird, der zuvor für den ersten Teilluftstrom 14 beschrieben worden ist. Alternativ kann die Vorrichtung auch so betrieben werden, dass zu einer bestimmten Zeit nur der erste Teilluftstrom 14 und zu einer anderen Zeit nur der zweite Teilluftstrom 13 fließt.

Trotz der lediglich schematischen Darstellung ist anhand der Fig. 1 recht gut zu erkennen, dass die hier als Luftleitglocke realisierte Luftleitvorrichtung 10 denjenigen Luftstrom, der im Wesentlichen in Längsrichtung (hier also von oben nach unten) der Luftleitglocke am Werkstück entlangfließt, so führt, dass er oberflächennah an der Oberfläche entlanggezwungen wird, vorzugsweise innerhalb eines vorgegebenen Maximalabstandes.

Wie erwähnt, dienen die Ausführungsbeispiele, anhand derer die Erfindung erläutert wird, zugleich auch zum Kühlen des Werkstücks. Zu diesem Zweck ist eine Sprühvorrichtung 15 vorgesehen. Diese arbeitet im einfachsten Fall als Flüssigkeits-Dusche. Vorzugsweise ist sie jedoch als Vernebler ausgeführt und arbeitet dann so, wie das in der Anmeldung DE 10 2009 034 730 beschrieben ist (jene Anmeldung bezeichnet den Vernebler auch als Injektor). Durch das Einnebeln einer Kühlflüssigkeit in den Trägerluftstrom entsteht eine von ihrem Volumen her vorzugsweise überwiegend aus Luft bestehende Luft/Kühlflüssigkeitsdispersion.

Idealerweise (wenngleich nicht zwingend) ist ein solcher Vernebler im Bereich des stromaufwärtigen Endes der Luftleitglocke angebracht, vorzugsweise innerhalb dieser.

Die Vorrichtung arbeitet dann während des Kühlzyklus so, wie das die Fig. 2 illustriert.

Der Vernebler ist so angebracht, dass die von ihm erzeugten Tröpfchen von dem turbulent durch die mindestens eine zweite Lufteintrittsöffnung 11 in die Luftleitglocke eintretenden Luftstrom mitgerissen und fein verteilt an dem Werkstück vorbeitransportiert werden, vorzugsweise ohne in signifikantem Umfang aus der Trägerluft auszufallen.

Auf diese Art und Weise wird das Werkstück schonend, aber gleichmäßig und dennoch schnell abgekühlt - ohne dass es zu einer übermäßigen Flüssigkeits-Benetzung des Werkstücks kommt.

Weitere Einzelheiten zu der optionalen Möglichkeit, die erfindungsgemäße Vorrichtung als Kombigerät auszugestalten, mit dem der Kühlzyklus und der Trocknungszyklus innerhalb eines einzigen Geräts realisiert werden können (vorzugsweise ohne das Werkstück zwischendurch handhaben zu müssen), werden an späterer Stelle beschrieben.

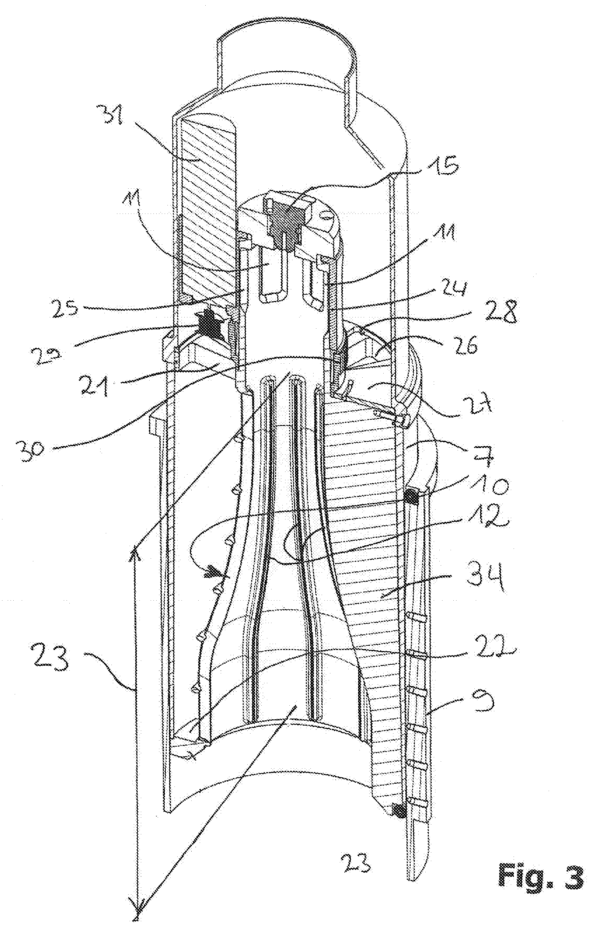

Die Figur 3 zeigt die Einzelheiten der erfindungsgemäßen Luftleitglocke 10. Die Luftleitglocke ist, wie man hier noch einmal gut erkennen kann, in das Innere des Luftkanals 7 eingesetzt. Sie ist stromaufwärts mit einem ersten Kragen 21 an der Innenseite des Luftkanals 7 befestigt und stromabwärts mit einem zweiten Kragen 22. Der zweite Kragen ist vorzugsweise so gestaltet, dass er verhindert, dass ein Teil des Luftstroms im "Bypass" an der Luftleitglocke vorbeifließt. Die Luftleitglocke besteht vorzugsweise aus Kunststoff.

Gut zu erkennen ist der für die Aufnahme des Werkstücks bestimmte Bereich 23 der Luftleitglocke. Er ist hier mit insgesamt sechs ersten Lufteintrittsöffnungen 12 versehen, die gleichmäßig am Umfang der Luftleitglocke verteilt angebracht sind und hier die sog. Blaseinrichtung bilden.

Diese ersten Lufteintrittsöffnungen 12 erstrecken sich jeweils im Wesentlichen in Richtung der Längsachse der Luftleitglocke 10. Sie sind jeweils als Langschlitz in der Wand der Luftleitglocke ausgestaltet, der sich im Wesentlichen über den gesamten Aufnahmeraum 8 für das zu trocknende Werkstück hinweg erstreckt.

Oberhalb des für die regelmäßige Aufnahme der zu trocknenden Werkstücke vorgesehenen Bereichs ist die Luftleitglocke mit zweiten Lufteintrittsöffnungen 11 versehen, die hier eine Anzahl voneinander beabstandeter Fenster bilden, durch die zumindest ein zweiter Teil des Luftstroms in die Luftleitglocke eintreten kann. Diese Lufteintrittsöffnungen 11 können mit Hilfe eines Steuerschiebers 24 geöffnet und geschlossen werden. Der Steuerschieber 24 ist als Zylinderhülse ausgestaltet, die drehbar auf der Luftleitglocke befestigt ist und deren Abschnitt übergreift, der die zweiten Lufteintrittsöffnungen 11 trägt. Der Steuerschieber 24 ist mit Öffnungen 25 versehen, die zumindest im Wesentlichen den zweiten Lufteintrittsöffnungen 11 entsprechen. Je nach Verdrehstellung des Steuerschiebers 24 fluchten die Öffnungen 11 und 25 ganz oder teilweise oder kommen miteinander überhaupt nicht zur Deckung ("vollständig geschlossen"). Auf diese Art und Weise kann der über die mindestens eine zweite Öffnung in die Luftleitglocke eintretende Luftstrom "an- und abgeschaltet" bzw. optional sogar gesteuert werden. Der Schieber 24 wird vorzugsweise durch einen Elektromotor betätigt.

Der stromaufwärtige erste Kragen 21 der Luftleitglocke weist dritte Öffnungen 26 auf. Auf dem Kragen liegt eine drehbare Steuerscheibe 27 auf, die ihrerseits vierte Öffnungen 28 besitzt, die im Wesentlichen den dritten Öffnungen 26 entsprechen. Je nach Verdrehstellung der Steuerscheibe fluchten diese Öffnungen ganz oder teilweise oder kommen überhaupt nicht zur Deckung. Auf diese Art und Weise kann der über die mindestens eine erste Lufteintrittsöffnung 12 in die Luftleitglocke eintretende Luftstrom kontrolliert bzw. sogar gesteuert werden.

Vorzugsweise wird die Steuerscheibe 27 eingesetzt, um mehrere erste Lufteintrittsöffnungen 12 nacheinander so mit Luft zu versorgen, dass eine kreisende Bewegung entsteht - vorzugsweise in Gestalt eines oder mehrerer in der Luftleitglocke umlaufender Luftmesser.

Zu diesem Zweck sind am Außenumfang der Luftleitglocke mindestens zwei oder besser mindestens drei in Längsrichtung der Luftleitglocke verlaufende Trennwände bzw. Rippen 34 vorgesehen, welche zusammen mit dem Luftkanal 7 (oder einer weiteren Wand) mehrere Kammern ausbilden, die die Luftleitglocke 10 umgeben. Mit jeder Kammer steht mindestens eine erste Lufteintrittsöffnung 12 bzw. ein Langschlitz der Luftleitglocke in Verbindung. Jede der Kammern kann über mindestens eine dritte Öffnung 26 der Steuerscheibe 27 mit einem Luftstrom versorgt werden und mit Hilfe eines fensterlosen Abschnitts der Steuerscheibe 27 von der Luftzufuhr abgetrennt werden. Durch Rotieren der Steuerscheibe können die mehreren ersten Lufteintrittsöffnungen 12 einzeln oder gruppenweise nacheinander mit Luft versorgt werden, so dass sich in der Luftleitglocke ein kreisender Radialluftstrom ausbildet, der besonders effektiv ist, weil jeder Teil der Oberfläche des zu trocknenden Werkstücks zu einem bestimmten Zeitpunkt auf kürzestem Wege von dem Radialluftstrom bestrichen wird.

Vorzugsweise werden die Steuerscheibe 27 und der Steuerschieber 24 von einem gemeinsamen Elektromotor 31 betätigt. Zu diesem Zweck ist der Elektromotor am Steuerschieber 24 festgelegt und "fährt" mit diesem mit. Andererseits treibt der Elektromotor vorzugsweise über ein Zahnrad oder mit Hilfe einer ersten Riemenscheibe 29 über einen hier nicht gezeigten Riemen die zweite am Steuerschieber 24 ausgebildete Riemenscheibe 30 an. Zum Antrieb des Steuerschiebers 24 wird das Reaktionsmoment genutzt, das am Motorgehäuse entsteht, wenn der Motor die Steuerscheibe 27 mit einem Drehmoment beaufschlagt - treibt man den Motor linksdrehend an, dann verdreht sein Reaktionsmoment den Steuerschieber 24 solange, bis er in Position "auf" oder "geschlossen" auf Anschlag geht, treibt man den Motor rechtsdrehend an, dann verdreht sein Reaktionsmoment den Steuerschieber 24 solange, bis er in Position "geschlossen" oder "auf" auf Anschlag geht.

Der Elektromotor 31 kann innerhalb des Luftkanals 7 untergebracht sein.

Der Vollständigkeit halber sei noch erwähnt, dass man anhand der Fig. 3 auch im Detail erkennen kann, wie die Sprühvorrichtung 15 an der Luftleitglocke befestigt ist - mit Hilfe einer Kappe, die das stromaufwärtige stirnseitige Ende der Luftleitglocke verschließt.

Zu erkennen in Fig. 3 ist auch die Schiebemuffe 9.

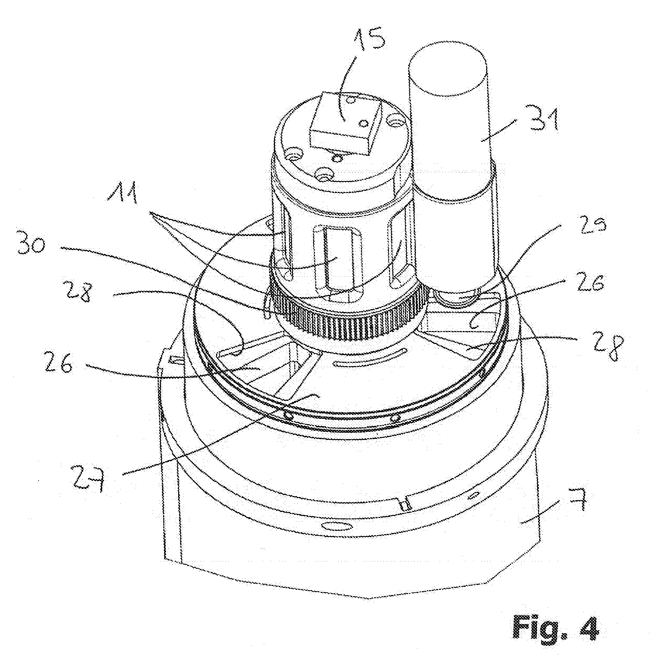

Die Fig. 4 zeigt eine der Fig. 3 entsprechende Abbildung des ersten Ausführungsbeispiels, aber in nicht-geschnittener Ansicht.

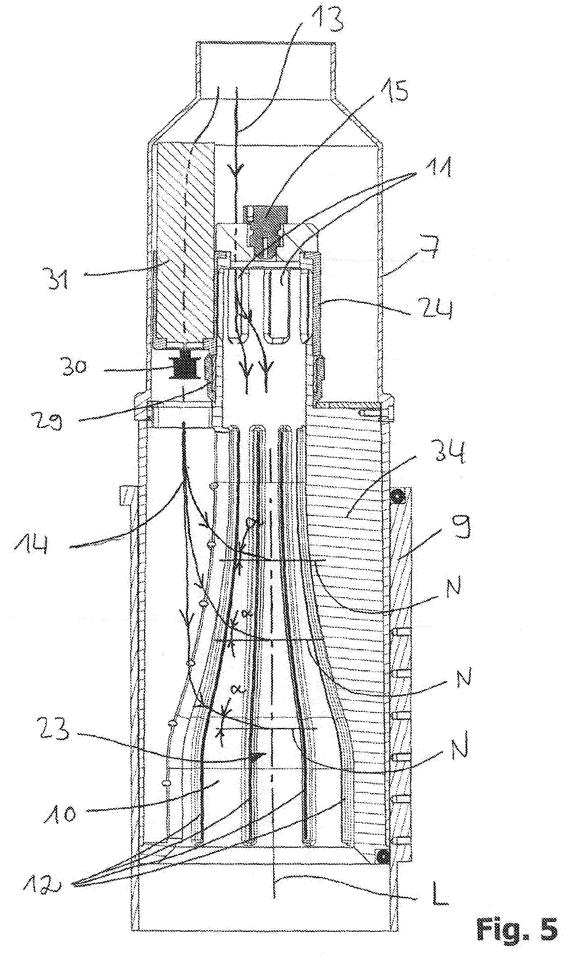

Die Fig. 5 zeigt ebenfalls eine der Fig. 3 entsprechende Abbildung des ersten Ausführungsbeispiels, aber in einer senkrecht von der Seite gesehenen Perspektive. Hier sind noch einmal die im Wesentlichen zu erwartenden Hauptrichtungen der zu erwartenden turbulenten Teilluftströme veranschaulicht.

Man sieht hier, wie der erste, durch die Blaseinrichtungen bzw. die diese ausbildenden ersten Lufteintrittsöffnungen 12 erzeugte erste Teilluftstrom 14 in die Luftleitglocke 10 eintritt, der dort unter einem Winkel α zu der Normalen auf die hier nur angedeutete Längsachse L des Werkstücks bzw. der Luftleitglocke auftrifft.

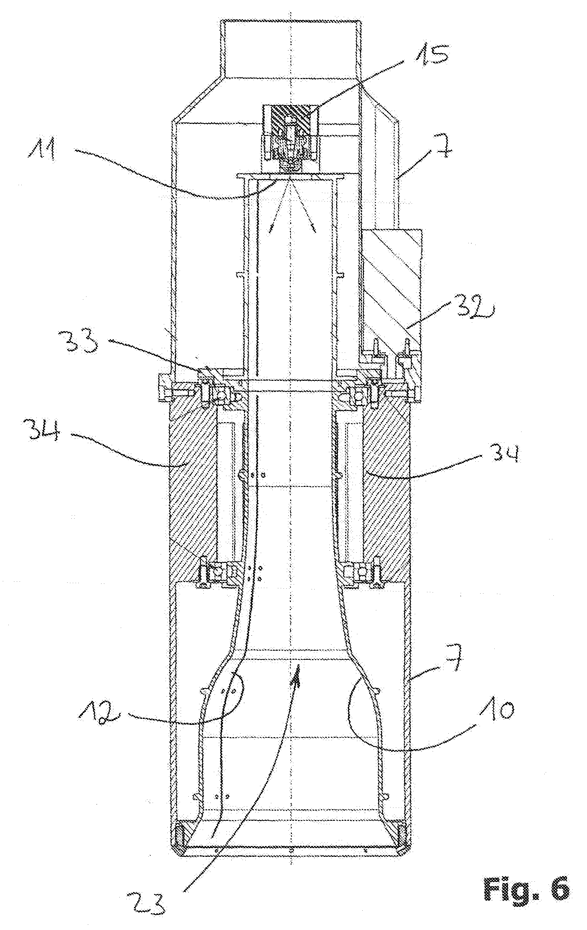

Die Fig. 6 zeigt ein zweites Ausführungsbeispiel der Erfindung. Bei diesem Ausführungsbeispiel ist die Luftleitglocke 10 - anders als zuvor - nicht ortsfest im Luftkanal 7 montiert, sondern drehbar in diesem gelagert, vorzugsweise mit Hilfe einer Anzahl von in das Innere des Luftkanals 7 hineinragenden Rippen 34, die entsprechende Lagerringe bzw. Lagersitze ausbilden und vorzugsweise Wälzlager halten. Zwischen diesen Rippen sind Abstände vorgesehen, so dass zumindest ein Teil des zur Trocknung zur Verfügung stehenden Luftstroms die Rippen passieren und erst unterhalb davon in das Innere der Luftleitglocke eintreten kann.

Die Luftleitglocke wird während des Trocknungszyklus zumindest zeitweilig drehend angetrieben. Vor Beginn der Drehbewegung wird die Luftleitglocke etwas angehoben, um etwaigen Reibkontakt mit dem Werkstück zu vermeiden. Als Drehantrieb dient ein Elektromotor 32 und ein an der Luftleitglocke angebrachtes Zahnrad 33, auf das dieser einwirkt. Das Zahnrad ragt aus dem Luftkanal 7 nach außen heraus und wird von dem außerhalb des Luftleitkanals liegenden Motor angetrieben. Alternativ ist es möglich, den Motor innerhalb des Luftleitkanals unterzubringen.

Auf Grund dessen, dass die Luftleitglocke während des Trocknungszyklus zumindest zeitweilig rotiert, reicht es ggf. aus, die Luftleitglocke nur mit einer einzigen Blaseinrichtung auszustatten, die hier in Gestalt einer einzigen ersten Lufteintrittsöffnung 12 in der Wand der Luftleitglocke 10 ausgeführt ist. Gleichwohl kann es im konkreten Fall auch bei einer drehbaren Luftleitglocke vorteilhaft sein, diese mit mehreren über ihren Umfang hinweg verteilten ersten Lufteintrittsöffnungen 12 auszustatten.

Wiederum mit der Bezugsziffer 15 ist hier die Sprühvorrichtung gekennzeichnet, die hier feststehend im Luftkanal 7 montiert ist und außerhalb der Luftleitglocke im Bereich von deren stromaufwärtigem Ende angeordnet ist. Die Sprühvorrichtung 15 spritzt oder vernebelt die Kühlflüssigkeit über mindestens eine vorzugsweise in der Stirnfläche der Luftleitglocke angebrachte zweite Öffnung 11 in das Innere der Luftleitglocke.

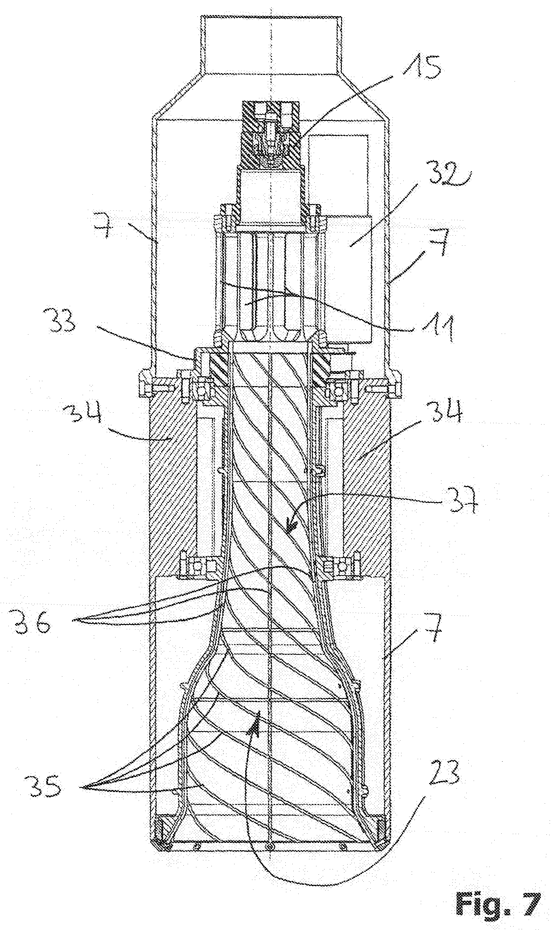

Die Fig. 7 veranschaulicht ein Ausführungsbeispiel des erfindungsgemäßen Abstandhalters, wie er bei allen der hier geschilderten Ausführungsbeispiele zum Einsatz kommen kann.

Der Abstandhalter ist hier als eine Art "Käfig" 37 ausgeführt, dessen Außenkontur im Wesentlichen der Kontur der Innenoberfläche der Luftleitglocke entspricht, allerdings mit einem geringeren Durchmesser. Der Käfig besteht aus Längsleisten 36 und im vorliegenden Fall entlang einer Schraubenlinie angeordneten, als Abstandhalter 35 fungierenden Leisten. Dieser Käfig wird so in die Luftleitglocke eingebracht und an ihr befestigt, dass (abgesehen von evtl. Befestigungsstellen) zumindest der oder die Abstandhalter 35 auf Abstand von der Innenoberfläche der Luftleitglocke liegen. Die "Maschenweite" bzw. der "Gitterabstand" des Käfigs ist kleiner als das kleinste bestimmungsgemäß in die Luftleitglocke einzubringende Werkstück, so dass auch dieses von dem Käfig zuverlässig auf Abstand von der Innenoberfläche der Luftleitglocke gehalten wird.

Zu guter Letzt ist nun noch, wie oben angekündigt, auf weitere Einzelheiten der optionalen Möglichkeit, mit der Vorrichtung zugleich auch eine Kühlung des Werkstücks zu realisieren, einzugehen.

Der Erfindung liegt in Bezug auf das Kühlen der Gedanke zu Grunde, das flüssige Kühlmittel nicht weitgehend unverdünnt zu verwenden, wie das bei der Tauch- oder Schwallkühlung der Fall ist, sondern in vergleichsweise feine Tröpfchen aufzulösen, damit quasi zu verdünnen, und diese Tröpfen dann mittels des ohnehin zur Verfügung stehenden Luftstroms zu transportieren, der zu diesem Zweck als Trägerluftstrom eingesetzt wird. Hierdurch besteht die Möglichkeit, die Kühlmitteltröpfchen mit erhöhter Geschwindigkeit an dem zu kühlenden Gegenstand vorbeizuführen - so dass sich eine schnelle, aber doch nicht zu scharfe Abkühlung ergibt, die zudem ausgesprochen gleichmäßig ist. Dabei hat der Transport mittels des (idealerweise in einer geschlossenen Schleife zirkulierenden) Trägergases den Vorteil, dass vorzugsweise wesentlich feinere Tröpfchen zum Einsatz kommen können als beim bekannten Bespritzen oder Besprühen, das - sofern überhaupt eine Auflösung in einzelne Tropfen erfolgt - auf eine vergleichsweise große Tropfengröße angewiesen ist, da die einzelnen Tropfen nur so hinreichend stark beschleunigt werden können, um den Weg bis zu dem zu kühlenden Gegenstand überwinden zu können.

Dabei ist es in der Regel so, dass es das fein verteilte flüssige Kühlmedium ist, welches den überwiegenden Teil der abzuführenden Wärmeenergie aufnimmt.

Ein Vorteil der erfindungsgemäßen Kühlung ist dabei der, dass die Tröpfchen so gewählt werden können, dass sich auch dann, wenn die Tröpfchen beim Auftreffen auf die Oberfläche des zu kühlenden Gegenstandes spontan verdampfen, keine ungleichmäßige Kühlung ergibt - anders als bei einer Tauch- oder Schwallkühlung, wo das verdampfende Kühlmedium mehr oder minder große lokale Dampfblasen bildet, die den Wärmeübergang zeitweilig behindern und so die Gefahr von Ungleichmäßigkeiten schaffen. Zudem wird entstehender Dampf bei der erfindungsgemäßen Verfahrensweise sofort von dem Trägergasstrom mitgerissen, abgeführt, wieder gekühlt und rekondensiert. Letzteres ist auch bei der Verwendung von Wasser mit Korrosionsinhibitoren wichtig, da letztere gesundheitlich bedenkliche Dämpfe bilden.

Idealerweise ist die Zerstäubung oder die Vernebelung des Kühlmediums so fein, dass dessen Tröpfchen durch den Trägergasstrom nicht nur in die Kühlkammer hinein transportiert werden, sondern im Wesentlichen auch wieder aus ihr heraus transportiert werden. Auf diese Art und Weise wird der zu kühlende Gegenstand nicht übermäßig benetzt, sondern kommt stetig mit neuen, frischen Tröpfchen in Kontakt. Die Tröpfchen sind zumindest überwiegend so fein, dass ihre Bewegung nicht wesentlich durch die Schwerkraft oder die Kräfte, die die Oberfläche des zu kühlenden Gegenstandes auf sie ausübt, bestimmt wird, sondern maßgeblich durch die Kräfte, die der Trägergasstrom auf sie ausübt.

Auf diese Art und Weise lässt sich die Intensität der Kühlung recht gut beeinflussen, indem kurzfristig die Geschwindigkeit des Trägergasstroms variiert wird und/oder die Menge des dem Trägergasstrom zugegebenen flüssigen Kühlmediums.

Zugleich erlaubt es der Umstand, dass der Kühlmittelstrom mit erhöhter Geschwindigkeit fließt und volumenmäßig überwiegend aus dem Trägergas und nicht aus dem flüssigen Kühlmedium besteht, den Kühlmittelstrom ohne besonderen Aufwand zu formen, beispielsweise auf den abzukühlenden Gegenstand zu fokussieren und/oder ihm einen Drall zu verleihen.

Ein generelles, allgemein gültiges Maß für die Größe der Kühlmitteltröpfchen lässt sich nur schwer angeben, da ihre ideale Größe stark von den individuellen Verhältnissen abhängt.

Als grober Anhaltspunkt lässt sich sagen, dass die Kühlmitteltröpfchen in den meisten Fällen einen Durchmesser haben sollten, der wenigstens kleiner als 1 mm oder, deutlich besser, zumindest überwiegend kleiner als 0,5 mm ist. Im Idealfall sind die Kühlmitteltröpfchen zumindest überwiegend kleiner als 0,1 mm oder so fein zerstäubt, dass sie zusammen mit dem Trägergas einen echten Nebel bilden. Vorzugsweise erhalten die Kühlmitteltröpfchen schon im Zuge ihrer anfänglichen Zerstäubung bzw. Vernebelung die genannten Durchmesser. Im Prinzip reicht es jedoch, wenn erst im Zuge der weiteren Verwirbelung, aber im Wesentlichen vor dem Auftreffen auf den zu kühlenden Gegenstand, Kühlmitteltröpfchen entstehen, die die genannten Durchmesser aufweisen.

Als Kühlmedium dient im vorliegenden Fall Wasser, denn Wasser ist kostengünstig, einfach zu handhaben und als solches physiologisch unbedenklich. Selbstverständlich können dem Wasser Korrosionsinhibitoren oder andere Additive zugesetzt werden, etwa solche, die die Benetzung des abzukühlenden Gegenstandes beeinflussen oder die Tropfenbildung. Das gilt natürlich auch bei Verwendung anderer flüssiger Kühlmedien als Wasser.

Vorzugsweise weist die Kühlvorrichtung stromabwärts des zu kühlenden Gegenstandes einen Kühler auf. Ein solcher Kühler setzt nicht nur die Temperatur des Kühlmittelstroms herab und gewährleistet damit bei dessen nächstem Umlauf eine effizientere Kühlung. Vielmehr ist es im Regelfall so, dass der Kühler auch dazu beiträgt, das Kühlmedium, insbesondere das zu diesem Zweck verwendete Wasser, wieder von dem Trägergasstrom abzutrennen. Auf diese Art und Weise hat man auf der Druckseite des Gebläses stets einen relativ "trockenen" Trägergasstrom zur Verfügung. Das eröffnet die Möglichkeit, dem Trägergasstrom bei jedem Umlauf erneut eine gezielte Menge an Kühlmedium zu dosieren und so den Abkühlvorgang gezielt zu beeinflussen.

Statt oder neben einem Kühler kann auch ein mechanischer Tröpfchenabscheider zum Einsatz kommen, z. B. in Gestalt eines Zentrifugalabscheiders oder in Gestalt einer ggf. mehrstufigen Umlenkeinrichtung, welche den Luftstrom so umlenkt, dass sich der Luftstrom und die Tröpfchen trennen. Ggf. kann auch ein Radialgebläse verwendet werden, das auf Grund der Fliehkräfte, denen es die Luft aussetzt, zugleich als Tröpfchenabscheider wirkt. Das flüssige Kühlmittel, welches durch die Zentrifugalkraft, die der Läufer des Radialgebläses auf den Trägergasstrom ausübt, abgeschieden worden ist, kann dann ganz einfach mit Hilfe des entsprechend gestalteten Mantels des Radialgebläses aufgefangen und anschließend mittels einer Pumpe abgezogen werden.

Auf diese Weise wird auch verhindert, dass Feuchtigkeit in nennenswertem Umfang von der Vorrichtung abgegeben wird. Diese Feuchtigkeit könnte in der Umgebung der Vorrichtung kondensieren und den Arbeitsplatz verschmutzen.

Der Ordnung halber sei ganz generell festgehalten, dass sich die Erfindung nicht ausschließlich, aber vorzugsweise auf eine Vorrichtung zum Trocknen von Werkzeugspannfuttern bzw. sogar (noch spezieller) Schrumpffuttern richtet, so dass überall dort, wo bislang der Begriff "Werkstück" verwendet wurde, wahlweise auch der Begriff "Werkzeugspannfutter" oder "Schrumpffutter" verwendet werden kann, wenn nur ein engerer Anwendungsbereich der Erfindung angesprochen werden soll.

### Bezugszeichenliste:

- 1: Vorrichtung
- 2: Pumpe
- 3: Trägerluftstrom
- 4: Trocknungsluftstrom
- 5: Druckseite
- 6: Saugseite
- 7: Gaskanal
- 8: Aufnahmeraum
- 9: Schiebemuffe
- 10: Luftleitvorrichtung/Luftleitglocke
- 11: zweite Lufteintrittsöffnungen
- 12: erste Lufteintrittsöffnungen
- 13: zweiter Teilluftstrom
- 14: erster Teilluftstrom
- 15: Sprühvorrichtung
- 16: Drehteller
- 17: Werkstückaufnahme
- 18: Werkstück
- 19: Hubtisch
- 20: Flüssiges Kühlmedium
- 21: Erster Kragen
- 22: Zweiter Kragen
- 23: Werkstückaufnahmeraum
- 24: Steuerschieber
- 25: Öffnungen
- 26: dritte Öffnungen
- 27: Steuerscheibe
- 28: Vierte Öffnungen
- 29: erste Riemenscheibe
- 30: zweite Riemenscheibe
- 31: Elektromotor
- 32: Elektromotor
- 33: Zahnrad
- 34: Rippen/Trennwände
- 35: Abstandhalter
- 36: Längsleisten
- 37: Käfig

## Patentansprüche

1. Vorrichtung (1) zum Trocknen eines zuvor einer Flüssigkeitsapplikation unterworfenen und im Wesentlichen um eine Werkstücklängsachse rotationssymmetrischen Werkstücks (18), vorzugsweise in Gestalt eines Schrumpffutters, wobei der zum Trocknen eingesetzte Luftstrom (4) in einem im wesentlichen geschlossenen Kreislauf geführt wird, der aus mindestens einer Pumpe (2), vorzugsweise in Gestalt eines Gebläses bzw. Radialgebläses, besteht und einem Luftkanal, der die Druckseite (5) und die Saugseite (6) der Pumpe (2) unter Zwischenschaltung einer Werkstückaufnahmekammer (23) miteinander verbindet, **wobei** die Vorrichtung (1) mindestens eine das Werkstück (18) umgreifende Luftleitvorrichtung (10) zum Leiten einer Luftströmung in Richtung entlang der Werkstücklängsachse aufweist und mindestens eine Blaseinrichtung, die einen Radialluftstrom auf das Werkstück (18) richtet.

2. Vorrichtung (1) nach Anspruch 1, **dadurch gekennzeichnet, dass** die das Werkstück (18) umgreifende Luftleitvorrichtung (10) so gestaltet ist, dass sie die Luftströmung entlang eines oberflächennahen Bereichs des Werkstücks (18) leitet, wobei die Luftleitvorrichtung (10) vorzugsweise eine Luftleitglocke (10) ist, die das Werkstück (18) zumindest während des Trocknungszyklus aufnimmt, wobei der Durchmesser des von der Luftleitglocke (10) gebildeten Innenraums nicht konstant ist.

3. Vorrichtung nach Anspruch 2, **dadurch gekennzeichnet, dass** sich der Durchmesser des vom Inneren der Luftleitglocke (10) gebildeten Aufnahmeraums (8) zur Abströmseite hin - vorzugsweise stetig - vergrößert.

4. Vorrichtung nach Anspruch 2 oder 3 **dadurch gekennzeichnet, dass** zumindest ein Teil der die Luftleitglocke (10) durchströmenden Trocknungsluft durch mindestens eine erste Öffnung (12) in die Luftleitglocke (10) einströmt, welche so ausgerichtet ist, dass der durch sie hindurch in die Luftleitglocke (10) einströmende Teil des Luftstroms als Radialluftström auf die zu trocknende Werkstückoberfläche auftrifft, wobei mindestens eine erste Öffnung (12) vorzugsweise so ausgebildet ist und so gespeist wird, dass der durch sie in die Luftleitglocke (10) einströmende Luftstrom ein Luftmesser bildet, das den sich in der Luftleitglocke (10) aufbauenden, im Wesentlichen in Längsrichtung entlang der zu trocknenden Werkstückoberfläche fließenden Luftstrom durchdringt und als Radialluftstrom auf die zu trocknende Oberfläche auftrifft.

5. Vorrichtung nach Anspruch 4, **dadurch gekennzeichnet, dass** die mindestens eine erste Öffnung (12) als Langschlitz ausgebildet ist, dessen Längsachse mit der Längsachse der Luftleitglocke (10) eine Ebene bildet oder dessen Längsachse in einer Schraubenlinie um die Längsachse der Luftleitglocke (10) erstreckt, vorzugsweise mit einem Steigungswinkel von > 20 Grad und idealerweise > 40 Grad gegenüber der jeweils örtlichen Umfangslinie der Luftleitglocke (10).

6. Vorrichtung nach einem der vorhergehenden Ansprüche 2 bis 5, **dadurch gekennzeichnet, dass** die Luftleitglocke (10) die Kühlluft so führt, dass sie nach ihrem erstmaligen Auftreffen auf die zu trocknende Werkstückoberfläche im Wesentlichen in Richtung entlang der Längsachse des zu kühlenden Werkstücks (18) an diesem vorbei abströmt.

7. Vorrichtung nach einem der Ansprüche 2 bis 6, **dadurch gekennzeichnet, dass** die Luftleitglocke (10) so im Inneren des Luftkanals angeordnet ist, dass zumindest ein Teil des zum Trocknen eingesetzten Luftstroms (4) an die Außenseite der Luftleitglocke (10) herangeführt wird, um dann über die mindestens eine Öffnung in die Luftleitglocke (10) einzuströmen und über das Innere der Luftleitglocke (10) abzuströmen.

8. Vorrichtung nach einem der Ansprüche 2 bis 7, **dadurch gekennzeichnet, dass** sich der Durchmesser der Luftleitglocke (10), ggf. im Anschluss an einen Abschnitt mit einem im Wesentlichen konstanten Durchmesser, zur Abströmseite hin vergrößert und dort vorzugsweise aber nicht zwingend in einen weiteren Abschnitt mit einem im Wesentlichen konstanten Durchmesser übergeht.

9. Vorrichtung nach einem der Ansprüche 2 bis 8, **dadurch gekennzeichnet, dass** die Luftleitglocke (10) so gelagert und angetrieben ist, dass sie sich während der Applikation der zum Trocknen verwendeten Luft (4) zumindest zeitweilig um ihre Längsachse dreht, vorzugsweise mit einer Drehzahl von mehr als 0,25 Umdrehungen pro Sekunde.

10. Vorrichtung nach einem der Ansprüche 2 bis 9, **dadurch gekennzeichnet, dass** die Luftleitglocke (10) in einem Bereich stromaufwärts des Werkstückaufnahmebereichs (23) mindestens eine zweite Öffnung (11) aufweist, durch die alternativ oder zusätzlich zu dem durch die mindestens eine erste Öffnung (12) in die Luftleitglocke (10) einströmenden Luftstrom ein Luftstrom einströmt, der im Wesentlichen in Längsrichtung an der Oberfläche des Werkstücks (18) vorbeiströmt, wobei die Vorrichtung vorzugsweise so gestaltet ist, dass die Luftleitglocke (10) mehrere an unterschiedlichen Stellen ihres Umfangs angebrachte erste Öffnungen (12) aufweist, die getrennt voneinander so aktiviert oder deaktiviert werden können, dass über sie ein Luftstrom in das Innere der Luftleitglocke (10) einströmen kann oder nicht, wobei die ersten Öffnungen (12) vorzugsweise so aktiviert und deaktiviert werden, dass hieraus eine kreisförmige Bewegung resultiert.

11. Vorrichtung nach einem der Ansprüche 2 bis 10, **dadurch gekennzeichnet, dass** der Außenumfang der Luftleitglocke (10) mit unterschiedlichen Kammern kommuniziert, die nicht gleichzeitig oder zumindest nicht dauerhaft gleichzeitig mit dem die Luftleitglocke (10) beaufschlagenden Luftstrom verbunden sind.

12. Vorrichtung nach einem der Ansprüche 2 bis 11, **dadurch gekennzeichnet, dass** an der Innenoberfläche der Luftleitglocke (10) ein Abstandhalter (35) angebracht ist, der gewährleistet, dass zwischen einem in die Luftleitglocke (10) eingebrachten Werkstück (18) und der Innenoberfläche der Luftleitglocke (10) ein bestimmter Mindestabstand frei bleibt, wobei der Abstandhalter (35) vorzugsweise eine Anzahl sich in Längsrichtung oder entlang einer Schraubenlinie die Oberfläche entlang erstreckender Leisten (36) umfasst.

13. Vorrichtung nach einem der Ansprüche 2 bis 12, **dadurch gekennzeichnet, dass** die Luftleitglocke (10) während einer dem Trocknungsprozess zeitlich vorgelagerten Kühlphase mit einer Kühlflüssigkeit (20) zur Abkühlung des Werkstücks (18) beaufschlagt werden kann.

14. Vorrichtung nach einem der Ansprüche 2 bis 13, **dadurch gekennzeichnet, dass** die Luftleitglocke (10) mit einer Luft-Flüssigkeits-Dispersion beaufschlagt werden kann, vorzugsweise dadurch, dass an oder im Bereich der stromaufwärtigen Stirnfläche der Luftleitglocke (10) mindestens ein Zerstäuber (15) oder Vernebler (15) angebracht ist, der bei Bedarf einen in die Luftleitglocke eintretenden Luftstrom mit fein verteilter Kühlflüssigkeit (20) befrachtet, wobei die Vorrichtung vorzugsweise so gestaltet ist, dass der Luftstrom zur Verbesserung der Trocknungswirkung angewärmt werden kann, vorzugsweise um 5 bis 10 °C, wobei die Anwärmung vorzugsweise durch eine zusätzliche Heizeinrichtung erfolgt und/oder idealerweise dadurch, dass zumindest ein Teil der Abwärme der Pumpe genutzt wird.

## Claims

1. A device (1) for drying a workpiece (18), which has previously been subjected to an application of a liquid and is substantially rotationally symmetrical about a longitudinal workpiece axis, preferably in the form of a shrink fit chuck, wherein the air flow (4) used for drying is guided in a substantially closed circuit that comprises at least one pump (2), preferably in the form of a blower or radial blower, and an air conduit that connects the pressure side (5) and the suction side (6) of the pump (2) with each other with a workpiece receiving chamber (23) being interposed, wherein the device (1) comprises at least one air-conducting device (10) that encompasses the workpiece (18), in order to guide an air flow in the direction along the longitudinal workpiece axis, and at least one blower device that directs a radial air flow at the workpiece (18).

2. The device (1) according to claim 1, **characterized in that** the air-conducting device (10) encompassing the workpiece (18) is configured so that it guides the air flow along a region close to the surface of the workpiece (18), the air-conducting device (10) preferably being an air-conducting bell (10) that accommodates the workpiece (18) at least during the drying cycle, wherein the diameter of the interior space formed by the air-conducting bell (10) is not constant.

3. The device according to claim 2, **characterized in that** the diameter of the accommodating space (8) formed by the interior of the air-conducting bell (10) increases - preferably steadily - toward the outlet side.

4. The device according to claim 2 or 3, **characterized in that** at least part of the drying air flowing through the air-conducting bell (10) enters the air-conducting bell (10) through at least one first opening (12), which is orientated so that the part of the air flow flowing through it into the air-conducting bell (10) strikes the workpiece surface to be dried in the form of a radial air flow, wherein the at least one first opening (12) is preferably configured and supplied so that the air flow flowing through it into the air-conducting bell (10) forms an air knife that penetrates the air flow building up in the air-conducting bell (10) and flowing substantially in the longitudinal direction along the workpiece surface to be dried and strikes the surface to be dried in the form of a radial air flow.

5. The device according to claim 4, **characterized in that** the at least one first opening (12) is configured as an elongated slot whose longitudinal axis forms a plane with the longitudinal axis of the air-conducting bell (10), or whose longitudinal axis extends in a helix around the longitudinal axis of the air-conducting bell (10), preferably with a helix angle of >20 degrees and ideally >40 degrees relative to the respective local circumference line of the air-conducting bell (10).

6. The device according to any one of the preceding claims 2 to 5, **characterized in that** the air-conducting bell (10) guides the cooling air so that, subsequent to initially striking the workpiece surface to be dried, it flows away past the workpiece (18) to be cooled, substantially in the direction along its longitudinal axis.

7. The device according to any one of the claims 2 to 6, **characterized in that** the air-conducting bell (10) is disposed on the inside of the air conduit so that at least a part of the air flow (4) used for drying is guided towards the outside of the air-conducting bell (10) in order to then flow into the air-conducting bell (10) via the at least one opening and flow away via the interior of the air-conducting bell (10).

8. The device according to any one of the claims 2 to 7, **characterized in that** a diameter of the air-conducting bell (10), if necessary adjacent to a portion with an substantially constant diameter, increases toward the outlet side and there preferably, but not necessarily, transitions into another portion with a substantially constant diameter.

9. The device according to any one of the claims 2 to 8, **characterized in that** the air-conducting bell (10) is supported and driven so that it rotates around its longitudinal axis at least some of the time during the application of air (4) used for drying, preferably at a speed of greater than 0.25 rotations per second.

10. The device according to any one of the claims 2 to 9, **characterized in that** in a region upstream of the workpiece receiving area (23), the air-conducting bell (10) has at least one second opening (11) through which, alternatively or in addition to the air flow flowing into the air-conducting bell (10) through the at least one first opening (12), an air flow flows in, which flows past the surface of the workpiece (18) substantially in the longitudinal direction, wherein the device is preferably configured such that the air-conducting bell (10) has several first openings (12) provided at various locations of its circumference, which can be activated or deactivated separately from one another in such a way that an air flow is able or unable to flow into the inside of the air-conducting bell (10), wherein the first openings (12) are preferably activated or deactivated in such a way that this results in a circular movement.

11. The device according to any one of the claims 2 to 10, **characterized in that** the outer circumference of the air-conducting bell (10) communicates with different chambers that are not simultaneously, or at least not permanently simultaneously, connected to the air flow applied to the air-conducting bell (10).

12. The device according to any one of the claims 2 to 11, **characterized in that** a spacer (35) is attached to an inner surface of the air-conducting bell (10), which ensures that a certain minimum distance remains free between a workpiece (18) inserted into the air-conducting bell (10) and the inner surface of the air-conducting bell (10), wherein the spacer (35) preferably includes a number of strips (36) extending along the surface in the longitudinal direction or along a helix.

13. The device according to any one of the claims 2 to 12, **characterized in that** during a cooling phase chronologically preceding the drying process, a cooling liquid (20) for cooling the workpiece (18) can be applied to the air-conducting bell (10).

14. The device according to any one of the claims 2 to 13, **characterized in that** an air/liquid dispersion can be applied to the air-conducting bell (10), preferably by at least one vaporizer (15) or atomizer (15) being mounted on or in the region of the upstream end face of the air-conducting bell (10), which, when needed, charges an air flow entering the air-conducting bell with finely dispersed cooling liquid (20), wherein the device is preferably configured in such a way that, in order to improve the drying action, the air flow can be heated, preferably by 5 to 10° C, wherein the heating process is preferably carried out by an additional heating unit and/or ideally by at least a part of the waste heat of the pump being used.

## Revendications

1. Dispositif (1) pour le séchage d'une pièce à oeuvrer (18) sensiblement à symétrie de révolution autour d'un axe longitudinal de pièce à oeuvrer, soumise auparavant à une application de liquide et de préférence sous la forme d'un mandrin contractible, dans lequel le flux d'air (4) mis en oeuvre pour le séchage circule dans un circuit sensiblement fermé qui est constitué par au moins une pompe (2), de préférence sous la forme d'un ventilateur ou d'un ventilateur radial, et par un canal d'air qui relie l'un à l'autre le côté pression (5) et le côté aspiration (6) de la pompe (2) en intercalant une chambre de réception de pièce à oeuvrer (23), le dispositif (1) présentant au moins un dispositif de conduite d'air (10) entourant la pièce à oeuvrer (18) pour diriger un flux d'air en direction le long de l'axe longitudinal de la pièce à oeuvrer, et au moins un dispositif de soufflage qui dirige un flux d'air radial sur la pièce à oeuvrer (18).

2. Dispositif (1) selon la revendication 1, **caractérisé en ce que** le dispositif de conduite d'air (10) entourant la pièce à oeuvrer (18) est réalisé de telle sorte qu'il dirige le flux d'air le long d'une zone proche de la surface de la pièce à oeuvrer (18), le dispositif de conduite d'air (10) étant de préférence une cloche de conduite d'air (10) qui reçoit la pièce à oeuvrer (18) au moins pendant le cycle de séchage, le diamètre de l'espace intérieur formé par la cloche de conduite d'air (10) n'étant pas constant.

3. Dispositif selon la revendication 2, **caractérisé en ce que** le diamètre de l'espace de réception (8) formé par l'intérieur de la cloche de conduite d'air (10) s'agrandit vers le côté aval - de préférence de manière continue.

4. Dispositif selon la revendication 2 ou 3, **caractérisé en ce qu'**au moins une partie de l'air de séchage s'écoulant à travers la cloche de conduite d'air (10) afflue à travers au moins une première ouverture (12) dans la cloche de conduite d'air (10), laquelle est orientée de telle sorte que la partie du flux d'air affluant à travers celle-ci jusque dans la cloche de conduite d'air (10) tombe sur la surface de la pièce à oeuvrer à sécher sous forme de flux d'air radial, au moins une première ouverture (12) étant de préférence réalisée et alimentée de telle sorte que le flux d'air affluant à travers celle-ci jusque dans la cloche de conduite d'air (10) forme une lame d'air qui pénètre dans le flux d'air se constituant dans la cloche de conduite d'air (10) et s'écoulant sensiblement en direction longitudinale le long de la surface de la pièce à oeuvrer à sécher et qui tombe sur la surface à sécher sous forme de flux d'air radial.

5. Dispositif selon la revendication 4, **caractérisé en ce que** ladite au moins une ouverture (12) est réalisée sous forme de fente allongée dont l'axe longitudinal forme avec l'axe longitudinal de la cloche de conduite d'air (10) un plan ou dont l'axe longitudinal s'étend selon une ligne hélicoïdale autour de l'axe longitudinal de la cloche de conduite d'air (10), de préférence avec un angle de pas de > 20 degrés et de manière idéale de > 40 degrés par rapport à la ligne périphérique respectivement locale de la cloche de conduite d'air (10).

6. Dispositif selon l'une des revendications 2 à 5, **caractérisé en ce que** la cloche de conduite d'air (10) guide l'air de refroidissement de telle sorte qu'après être tombé la première fois sur la surface de la pièce à oeuvrer à sécher, il s'écoule sensiblement en direction le long de l'axe longitudinal de la pièce à oeuvrer (18) à refroidir en passant devant celle-ci.

7. Dispositif selon l'une des revendications 2 à 6, **caractérisé en ce que** la cloche de conduite d'air (10) est agencée à l'intérieur du canal d'air de telle sorte qu'au moins une partie du flux d'air (4) mis en oeuvre pour le séchage est guidé vers la face extérieure de la cloche de conduite d'air (10) pour affluer alors via ladite au moins une ouverture jusque dans la cloche de conduite d'air (10) et pour s'écouler via l'intérieur de la cloche de conduite d'air (10).

8. Dispositif selon l'une des revendications 2 à 7, **caractérisé en ce que** le diamètre de la cloche de conduite d'air (10), le cas échéant en raccordement à un tronçon avec un diamètre sensiblement constant, s'agrandit en direction du côté écoulement et se transforme à cet endroit de préférence, mais pas obligatoirement, en un autre tronçon avec un diamètre sensiblement constant.

9. Dispositif selon l'une des revendications 2 à 8, **caractérisé en ce que** la cloche de conduite d'air (10) est montée et entraînée de telle sorte que pendant l'application de l'air (4) utilisé pour le séchage, elle tourne au moins temporairement autour de son axe longitudinal, de préférence avec une vitesse de plus de 0,25 tours par seconde.

10. Dispositif selon l'une des revendications 2 à 9, **caractérisé en ce que** dans une zone située en amont de la zone de réception de pièce à oeuvrer (23), la cloche de conduite d'air (10) présente au moins une deuxième ouverture (11) à travers laquelle, de façon alternative ou additionnelle au flux d'air affluant dans la cloche de conduite d'air (10) à travers ladite au moins une première ouverture (12), s'écoule un flux d'air qui passe sensiblement en direction longitudinale devant la surface de la pièce à oeuvrer (18), le dispositif étant réalisé de préférence de telle sorte que la cloche de conduite d'air (10) présente plusieurs premières ouvertures (12) ménagées à différents endroits de sa périphérie, qui peuvent être activées ou désactivées séparément les unes vis-à-vis des autres de telle sorte que via celles-ci, un flux d'air peut affluer ou non jusque dans l'intérieur de la cloche de conduite d'air (10), les premières ouvertures (12) étant de préférence activées et désactivées de telle sorte qu'il en résulte un mouvement circulaire.

11. Dispositif selon l'une des revendications 2 à 10, **caractérisé en ce que** la périphérie extérieure de la cloche de conduite d'air (10) communique avec différentes chambres qui ne sont pas simultanément ou au moins pas durablement simultanément reliées avec le flux d'air sollicitant la cloche de conduite d'air (10).

12. Dispositif selon l'une des revendications 2 à 11, **caractérisé en ce que** sur la surface intérieure la cloche de conduite d'air (10) est monté un écarteur (35) qui assure qu'entre une pièce à oeuvrer (18) introduite dans la cloche de conduite d'air (10) et la surface intérieure de la cloche de conduite d'air (10), un espace minimum déterminé reste libre, l'écarteur (35) comprenant de préférence un nombre de nervures (36) s'étendant en direction longitudinale ou le long d'une ligne hélicoïdale le long de la surface.

13. Dispositif selon l'une des revendications 2 à 12, **caractérisé en ce que** pendant une phase de refroidissement ayant eu lieu précédemment au processus de séchage, la cloche de conduite d'air (10) peut être alimentée avec un liquide de refroidissement (20) pour refroidir la pièce à oeuvrer (18).

14. Dispositif selon l'une des revendications 2 à 13, **caractérisé en ce que** la cloche de conduite d'air (10) peut être alimentée avec une dispersion liquide-air, de préférence par le fait que sur ou dans la zone de la face frontale amont de la cloche de conduite d'air (10) est monté au moins un pulvérisateur (15) ou un nébuliseur (15) qui charge au besoin un flux d'air entrant dans la cloche de conduite d'air avec un liquide de refroidissement (20) finement réparti, le dispositif étant réalisé de préférence de telle sorte que le flux d'air peut être réchauffé pour améliorer l'effet de séchage, de préférence de 5 à 10°C, le réchauffement étant effectué de préférence par un dispositif de chauffage additionnel et/ou de manière idéale par le fait qu'au moins une partie de la chaleur dissipée par la pompe est utilisée.
